## Europäisches Patentamt
## European Patent Office
## Office européen des brevets

(19)

(11) Numéro de publication: **0 175 423**
**B1**

(12) **FASCICULE DE BREVET EUROPEEN**

(45) Date de publication du fascicule du brevet:
30.03.88

(21) Numéro de dépôt: **85201477.8**

(22) Date de dépôt: **16.09.85**

(51) Int. Cl.⁴: **C 01 B 33/32**

(54) **Procédé de préparation de silicate de lithium.**

(30) Priorité: **21.09.84 BE 2060505**

(43) Date de publication de la demande:
**26.03.86 Bulletin 86/13**

(45) Mention de la délivrance du brevet:
**30.03.88 Bulletin 88/13**

(84) Etats contractants désignés:
**DE FR GB IT NL**

(56) Documents cités:
FR - A - 2 270 205
US - A - 2 083 545

**GMELINS HANDBUCH DER ANORGANISCHEN
CHEMIE, édition 8, Lithium-Ergänzungsband,
System-Nummer 20, 1960, Verlag Chemie, GmbH.,
Weinheim, DE, page 515**

(73) Titulaire: **"Centre d'Etude de l'Energie Nucléaire",
"C.E.N.", Rue Charles Lemaire 1, B-1160 Bruxelles (BE)**

(72) Inventeur: **Flipot, Alfred Jean Pierre, Ericastraat 9,
B-2440 Geel (BE)**
Inventeur: **Diels, Paulus Henricus Philomena,
Varenstraat 53, B-2300 Turnhout (BE)**
Inventeur: **Lecocq, Raymond Joseph Alexis,
Kastelsebaan 23, B-2400 Mol (BE)**

(74) Mandataire: **De Rycker, Rudolf, Ir. et al, Vereenigde
Octrooibureaux Belgie S.A. Charlottalei 48,
B-2018 Antwerpen (BE)**

## Description

La présente invention se rapporte à un procédé de préparation de silicate de lithium, selon lequel on mélange intimement du carbonate de lithium et de la silice et on soumet ensuite ce mélange à un traitement thermique.

Le silicate de lithium peut être, par exemple, utilisé comme matériau de couverture dans les réacteurs de fusion dans le but de produire du tritium.

Un procédé couramment utilisé pour la préparation de silicate de lithium consiste à mélanger, dans les proportions appropriées, du carbonate de lithium et de la silice et à calciner ce mélange à une température proche du point de fusion du carbonate de lithium (718°C plus ou moins 2°C). Le silicate ainsi obtenu est peu frittable et ne convient pas pour la fabrication de pastilles denses (plus de 85% de la densité théorique) par pastillage à froid et frittage.

L'invention a pour but de remédier à cet inconvénient et de procurer un procédé de préparation de silicate de lithium permettant d'obtenir du silicate de lithium frittable et par conséquent utilisable pour la fabrication de pastilles de densité élevée par pastillage à froid et frittage.

Dans ce but, on soumet le mélange à un traitement thermique de pré-calcination à une température comprise entre 410 et 440°C de manière à former dans le mélange au moins 25% en poids d'une phase hexagonale composée de lithium, de silicium et d'oxygène dont les paramètres cristallins sont a = 3,06 Å et c = 4,97 Å.

Par pré-calcination, il faut entendre ici un traitement thermique à une température en-dessous de 440°C.

La phase susdite, non encore décrite dans la littérature spécialisée et appelée ci-après phase X, serait isomorphe à l'aluminate de lithium LiAlO₂ décrit par T.I. Barry et ses collaborateurs dans «The crystallisation of glasses based on the Eutectic composition in the system Li₂O - Al₂O₃ - SiO₂, Part II, Lithium Metasilicate-beta Eucryptite». (Journal of Materials Science 5; 1970/117-126). Les auteurs sont toutefois très peu sûrs de la composition du composé précité et la fiche descriptive correspondante a été retirée de la «Powder Diffraction File» en 1983.

Dans une forme de réalisation particulière de l'invention on maintient le mélange au moins pendant 10 heures à une température entre 410° et 440°C.

Dans une forme de réalisation avantageuse de l'invention on effectue le traitement thermique de pré-calcination à une température entre 430° et 435°C.

Dans une forme de réalisation efficace de l'invention on effectue le traitement thermique de pré-calcination sous air humide.

De préférence on effectue le traitement thermique sous air humide contenant au moins 10% d'humidité relative.

Après le traitement thermique de pré-calcination, le produit riche en phase X peut être pastillé directement et fritté à densité relativement élevée ou il peut encore être calciné à basse température (de 450 à 600°C) avant d'être pastillé et fritté à densité elevée.

La pré-calcination et la calcination sont de préférence effectuées en un seul traitement, par exemple, par une montée lente entre 410 et 470°C en 60 h.

D'autres particularités et avantages de l'invention ressortiront de la description d'un procédé de préparation de silicate de lithium selon l'invention; cette description n'est donnée ci-après qu'à titre d'exemple non-limitatif.

Pour préparer du silicate de lithium frittable on mélange d'abord intimement des quantités appropriées de carbonate de lithium et de silice.

Ce mélange peut se présenter sous forme de poudre, de granules ou de comprimés.

On soumet ensuite ce mélange à un traitement thermique sous air humide pendant plusieurs heures, afin de former une phase intermédiaire X hexagonale composée de lithium, de silicium et d'oxygène et dont les paramètres cristallines sont a = 3,06 Å et c = 4,97 Å.

Cette phase X est idéalement formée par un traitement thermique de pré-calcination du mélange effectué entre 430 et 435°C mais se forme aussi en quantité suffisante entre 410 et 430°C ou entre 435 et 440°C à condition que le mélange soit maintenu au moins 10 h entre ces températures.

Il n'est en effet pas nécessaire de travailler dans les conditions optimales de formation de phase X.

Il suffit, pour avoir les résultats attendus, d'en former au moins 25% en poids.

Cette phase X se transforme d'ailleurs progressivement en métasilicate.

On soumet par conséquent le mélange susdit de carbonate de lithium et de silice pendant plusieurs heures à un traitement thermique de pré-calcination à une température entre 410 et 440°C et de préférence entre 430 et 435°C sous air humide.

On effectue le traitement de préférence sous air humide contenant au moins 10% d'humidité relative. Les meilleurs résultats s'obtiennent cependant avec de l'air saturé en humidité à température ambiante. On effectue le traitement de pré-calcination de préférence pendant ou moins 10 heures, surtout s'il a lieu à des températures entre 410 et 430°C ou entre 435 et 440°C.

Il est évident que ce traitement thermique peut se faire soit à température constante, soit par paliers successifs, soit par montée continue lente.

Le traitement thermique modifie la frittabilité du mélange.

Après ce traitement thermique de pré-calcination on pastille et fritte à densité relativement élevée le produit riche en phase X ou on calcine d'abord ce produit à température relativement basse (de 450 à 600°C) pour transformer la phase X en métasilicate après quoi on le pastille et le fritte à densité élevée.

La pré-calcination et la calcination sont de préférence effectuées en un seul traitement, par exemple, par une montée lente entre 410 et 460 à 480°C en 50 à 70 heures et de préférence à partir de 410°C jusqu'à 460°C en 60 heures.

La formation de 25% de phase X est essentielle pour obtenir, même après la calcination, un produit à surface spécifique élevée et donc très frittable. Le tableau ci-dessous illustre ces résultats: il donne les surfaces spécifiques de mélanges de carbonate de lithium et de silice, broyés sous eau, séchés par pulvérisation puis traités ou non selon l'invention:

| Traitement thermique | BET en $m^2/g$ |
|---|---|
| *selon l'invention* | |
| granules pré-calcinés sous air humide successivement 6 h à 410°C, 1 h à 420°C et 8 h à 430°C | 56 |
| poudres pré-calcinées sous air à 60% d'humidité relative pendant 15 h à 430°C | 60 |
| Pastille pré-calcinée 24 h à 421°C puis calcinée 24 h à 529°C | 34 |
| granules pré-calcinés 8 h à 430°C puis calcinés 12 h à 550°C | 38 |
| poudre pré-calciné 30 h à 430°C puis calcinée 16,5 h à 605°C | 15 |
| *calcination d'un produit qui ne contient pas de phase X* | |
| poudre pré-calciné 60 h à 380°C puis calcinée 24 h à 550°C | 3 |
| poudre calcinée 24 h à 600°C | 3,5 |

Il est évident que le procédé selon l'invention est valable pour l'obtention de silicates de lithium frittables destinés à la réalisation de pièces frittées de densité élevée ainsi que pour la réalisation de pièces frittées quelles que soient la méthode de mise en forme et la forme finale de ces pièces. Ces pièces sont, par exemple, formées sous forme de pastilles ou de granules.

Le procédé selon l'invention garantit une surface spécifique élevée (voir tableau ci-dessus) et une frittabilité élevée: il est donc possible de réaliser des pièces denses en frittant à des températures pas trop élevées et pendant des temps courts. Ceci permet d'avoir une structure à grain fin.

Le procédé permet également d'augmenter la frittabilité des produits pré-calcinés uniquement ou pré-calcinés et calcinés en augmentant la finesse des matières premières. Ceci n'est pas possible sans former la phase X.

Selon le procédé décrit ci-dessus on peut obtenir après le traitement thermique de pré-calcination, un mélange formé de phase X et de métasilicate contenant encore du carbonate résiduel mais exempt de disilicate et d'ortho-silicate même si la composition générale du mélange s'écarte dans un sens ou dans l'autre de la composition stoechiométrique correspondant au métasilicate. Après calcination à basse température, la composition du produit obtenu est assez proche de la composition nominale du mélange. Ceci n'est absolument pas le cas par calcination directe à basse température sans le traitement thermique de pré-calcination susdit: on obtient alors un mélange riche en disilicate qui doit se transformer en métasilicate au cours du frittage, ce qui provoque des déformations des pastilles et une chute de densité.

Quelques exemples illustrent l'invention ci-après:

*Exemple 1*

190 g de poudre de carbonate de lithium et 160 g de silice (aérosil de la firme Degussa - 300 $m^2/g$) sont mélangés avec de l'eau distillée jusqu'à formation d'une pâte lisse. Cette pâte est broyée 60 minutes sous eau dans un attritor dont le récipient, les billes et le bras sont en alumine. La suspension ainsi obtenue est maintenue sous agitation constante pour éviter toute ségrégation puis séchée par pulvérisation.

La poudre fine qui en résulte a une surface spécifique de 110 $m^2/g$.

La poudre est pré-calcinée sous air humide pendant 30 h à 430°C puis calcinée pendant 16 h à 605°C avant d'être pastillée sous 2,5 $t/cm^2$ dans une matrice de 6 mm de diamètre.

Après 9 h de frittage à 950°C à l'air, les pastilles ont une densité de 91,4% D.T.

Le même mélange broyé pendant 120 minutes au lieu de 60 minutes et traité dans les mêmes conditions donne des pastilles frittées de 95% D.T. (à partir de pastilles vertes de 48% D.T.) et de 98% D.T. (à partir de pastilles vertes de 50% D.T.).

*Exemple 2*

272 g de poudre de carbonate de lithium sont mélangés avec 228 g de silice (aérosil de la firme Dégussa) et de l'eau, broyés pendant 60 minutes à l'aide d'un attritor puis séchés par pulvérisation.

La poudre séchée est précompactée sous 1,2 $t/cm^2$ en pastilles de 12 mm de diamètre. Les pastilles sont granulées sur une grille de 1 mm; les granules obtenus sont traités thermiquement successivement pendant 6 h à 410°C, pendant 16 h à 420°C et pendant 8 h à 430°C sous air humide puis pastillés sous 2,5 $t/cm^2$. Les pastilles atteignent soit une densité de 87,6% D.T. après 3 h à 950°C soit 81,1% D.T. après 1 h à 950°C.

*Exemple 3*

Les granules pré-calcinés de l'exemple 2 sont calcinés pendant 12 h à 525°C avant d'être pastillés sous 2,5 $t/cm^2$. Les pastilles atteignent une densité de 93% D.T. après 3 h à 925°C et 90% D.T. après 1 h à 950°C.

**Revendications**

1. Procédé de préparation de silicate de lithium selon lequel on mélange intimement du carbonate de lithium et de la silice et on soumet ensuite ce mélange à un traitement thermique, caractérisé en ce qu'on soumet le mélange à un traitement thermique de pré-calcination à une température comprise entre 410 et 440°C de manière à former dans le mélange au moins 25% en poids d'une phase hexagonale composée de lithium, de silicium et d'oxygène dont les paramètres cristallines sont a = 3,06 Å et c = 4,97 Å.

2. Procédé selon la revendication 1, caractérisé en ce qu'on maintient le mélange au moins pendant 10 heures à une température entre 410° et 440°C.

3. Procédé selon l'une ou l'autre des revendications 1 et 2, caractérisé en ce qu'on effectue le traitement thermique de pré-calcination à une température entre 430°C et 435°C.

4. Procédé selon l'une ou l'autre des revendications 1 à 3, caractérisé en ce qu'on effectue le traitement thermique de pré-calcination sous air humide.

5. Procédé selon la revendication 4, caractérisé en ce qu'on effectue le traitement thermique de pré-calcination sous air humide contenant au moins 10% d'humidité relative.

6. Procédé selon la revendication 5, caractérisé en ce qu'on effectue le traitement thermique de pré-calcination sous air humide saturé d'humidité à température ambiante.

7. Procédé selon l'une ou l'autre des revendications 1 à 6, caractérisé en ce qu'après le traitement thermique de pré-calcination on soumet le produit obtenu directement à un frittage à densité élevée.

8. Procédé selon l'une ou l'autre des revendications 1 à 6, caractérisé en ce qu'après le traitement thermique de pré-calcination susdit on soumet le produit obtenu à une calcination.

9. Procédé selon la revendication 8, caractérisé en ce qu'après le traitement thermique de pré-calcination susdit on soumet le produit obtenu à une calcination à une température entre 450 et 600°C.

10. Procédé selon les revendications 2 et 9, caractérisé en ce qu'on effectue le traitemetn thermique de pré-calcination susdit et la calcination en une montée lente en 50 à 70 heures à partir d'environ 410°C jusqu'à 460° à 480°C.

11. Procédé selon la revendication 10, caractérisé en ce qu'on effectue le traitement thermique de pré-calcination sudit et la calcination en une montée lente en 60 heures à partir de 410° jusqu'à 460°C.

12. Procédé selon l'une ou l'autre des revendications 8 à 11, caractérisé en ce qu'après la calcination on soumet le produit à un frittage à densité élevée.

## Patentansprüche

1. Verfahren zur Herstellung von Lithiumsilikat, bei dem Lithiumcarbonat und Siliziumoxid innig vermischt wird und die Mischung einer thermischen Behandlung unterzogen wird, dadurch gekennzeichnet, dass die Mischung einer thermischen Behandlung der Vorbrennung bei einer Temperatur zwischen 410 und 440°C unterworfen wird, derart, dass in dem Gemisch mindestens 25 Gew.-% einer hexagonalen Phase gebildet wird, die zusammengesetzt ist aus Lithium, Silizium und Sauerstoff, und deren kristalline Parameter a = 3,06 Å und c = 4,97 Å sind.

2. Verfahren nach Anspruch 1, dadurch gekennzeichnet, dass das Gemisch mindestens während 10 Stunden auf einer Temperatur zwischen 410° und 440°C gehalten wird.

3. Verfahren nach einem der Ansprüche 1 oder 2, dadurch gekennzeichnet, dass die thermische Behandlung des Vorbrennens bei einer Temperatur zwischen 430°C und 435°C durchgeführt wird.

4. Verfahren nach einem der Ansprüche 1 bis 3, dadurch gekennzeichnet, dass die thermische Behandlung des Vorbrennens in feuchter Luft durchgeführt wird.

5. Verfahren nach Anspruch 4, dadurch gekennzeichnet, dass die thermische Behandlung des Vorbrennens in feuchter Luft durchgeführt wird, die mindestens 10% relative Feuchtigkeit enthält.

6. Verfahren nach Anspruch 5, dadurch gekennzeichnet, dass die thermische Behandlung des Vorbrennens in feuchter Luft durchgeführt wird, die bei Umgebungstemperatur mit Feuchtigkeit gesättigt ist.

7. Verfahren nach einem der Ansprüche 1 bis 6, dadurch gekennzeichnet, dass nach der thermischen Behandlung des Vorbrennens das erhaltene Produkt direkt einer Sinterung erhöhter Dichte unterworfen wird.

8. Verfahren nach einem der Ansprüche 1 bis 6, dadurch gekennzeichnet, dass nach der thermischen Behandlung des Vorbrennens das erhaltene Produkt einer Brennung unterzogen wird.

9. Verfahren nach Anspruch 8, dadurch gekennzeichnet, dass nach der thermischen Behandlung des Vorbrennens das erhaltene Produkt einer Brennung bei einer Temperatur zwischen 450 und 600°C unterworfen wird.

10. Verfahren nach den Ansprüchen 2 und 9, dadurch gekennzeichnet, dass die thermische Behandlung des Vorbrennens und das Brennen in einem langsamen Anstieg von 50 bis 70 Stunden ausgehend von 410° bis 460°C durchgeführt werden.

11. Verfahren nach Anspruch 10, dadurch gekennzeichnet, dass die thermische Behandlung des Vorbrennens und das Brennen in einem langsamen Anstieg von 60 Stunden ausgehend von 410° bis 460°C durchgeführt werden.

12. Verfahren nach einem der Ansprüche 8 bis 11, dadurch gekennzeichnet, dass nach dem Brennen das Produkt einem Sintern erhöhter Dichte unterworfen wird.

## Claims

1. Process for the preparation of lithium silicate according to which lithium carbonate and silica are intimately mixed and this mixture is then subjected to a heat treatment, characterized in the the mixture is subjected to a precalcination heat treatment at a temperature of between 410 and 440°C so as to form in the mixture at least 25% by weight of a hexagonal phase consisting of lithium, silicon and oxygen, the crystal parameters of which are: a = 3,06 Å and c = 4,97 Å.

2. Process according to claim 1, characterized in that the mixture is maintained at a temperature between 410° and 440°C at least for 10 hours.

3. Process according to either of claims 1 and 2, characterized in that the precalcination heat treatment is carried out at a temperature between 430°C and 435°C.

4. Process according to any one of claims 1 to 3, characterized in that the precalcination heat treatment is carried out in moist air.

5. Process according to claim 4, characterized in that the precalcination heat treatment is carried out in moist air containing at least 10% of relative humidity.

6. Process according to claim 5, characterized in that the precalcination heat treatment is carried out in moist air which is saturated with moisture at ambient temperature.

7. Process according to any one of claims 1 to 6, characterized in that after the precalcination heat treatment, the product obtained is directly subjected to a high density sintering.

8. Process according to any one of claims 1 to 6, characterized in that after the abovementioned precalcination heat treatment, the product obtained is subjected to a calcination.

9. Process according to claim 8, characterized in that after the abovementioned precalcination heat treatment, the product obtained is subjected to a calcination at a temperature between 450 and 600°C.

10. Process according to claims 2 and 9, characterized in that the abovementioned precalcination heat treatment and the calcination are carried out in a slow rise, over 50 to 70 hours, from approximately 410°C up to 460° to 480°C.

11. Process according to claim 10, characterized in that the abovementioned precalcination heat treatment and the calcination are carried out in a slow rise, over 60 hours, from 410° up to 460°C.

12. Process according to any one of claims 8 to 11, characterized in that after the calcination, the product is subjected to a high density sintering.